# EUROPÄISCHE PATENTSCHRIFT

(11) **EP 0 916 907 B1**
(45) Veröffentlichungstag und Bekanntmachung des Hinweises auf die Patenterteilung: **24.03.2004**
(21) Anmeldenummer: 98120267.4
(22) Anmeldetag: 27.10.1998
(51) Int. Cl.: F24H 3/02

(54) **Mobiles Warmluftgebläse**
Mobile hot air blower
Soufflante mobile d'air chaud

(30) Priorität: 12.11.1997 DE 29720043 U
(43) Veröffentlichungstag der Anmeldung: 19.05.1999
(73) Patentinhaber: Hans Wilms GmbH & Co., 41238 Mönchengladbach (DE)
(72) Erfinder: Peterson, Avo, 40668 Meerbusch (DE)
(74) Vertreter: Bonsmann, Manfred, Dipl.-Ing.

(56) Entgegenhaltungen:
- EP-A- 0 340 692
- JP-A- 5 322 312
- US-A- 4 307 701

## Beschreibung

Die Erfindung betrifft ein mobiles Warmluftgebläse mit einem Gehäuse mit Lufteintritts- und Austrittsöffnungen, einem oder mehreren Energie-/Wärmeumsetzern und einer Axialventilatoranordnung zur Förderung der zu erwärmenden Luft. Das Gehäuse kann sowohl eine kubische als auch eine rohrförmige Gestalt aufweisen. Der Energie-/Wärmeumsetzer kann z.B. mit Heizöl (auch Diesel oder Petroleum), Gas oder auch Strom betrieben werden. Die Axialventilatoranordnung kann einen oder auch mehrere vorzugsweise an der Gehäuserückseite nebeneinander angeordnete Axialventilatoren aufweisen.

Bisher bekannte mobile Warmluftgebläse sind für niedrige Pressung mit einem (oder mehreren parallel wirkenden) Axialventilatoren ausgestattet, oder mit einem Radialgebläse, wenn die angeschlossenen Warmluftschläuche oder -kanäle eine höhere Pressung erfordern als mit Axialventilatoren in üblicher Anordnung erzielbar ist.

Beide Arten der beschriebenen mobilen Warmluftgebläse sind unterschiedlich in ihrer Bauart. Da auch die Einsatzarten sehr unterschiedlich und nicht vorhersehbar sind, ist die Produktionspalette der Hersteller solcher Geräte größer als die Anzahl der Leistungsabstufungen, weil sowohl Geräte mit niedriger Pressung als auch mit erhöhter Pressung angeboten werden müssen. Um möglichst alle Anwendungsgebiete abdecken zu können, besteht der Gerätepark bei gewerblichen Vermietern zu einem erheblichen Teil aus Warmluftgebläsen mit erhöhter Pressung, was die Kosten des Geräteparks zwar unnötig erhöht, aber Komplikationen und Kosten mindert, wenn der Vermieter erst am Einsatzort feststellt, daß die mitgebrachten Warmluftgebläse mit niedriger Pressung die Anforderungen nicht erfüllen. Unter dem Gesichtspunkt der Geräuschentwicklung wiederum kann ein Warmluftgebläse mit erhöhter Pressung einen unerwünscht hohen Lärmpegel verursachen, wenn die Anforderungen am Einsatzort, z.B. wegen kurzer Warmluftschläuche oder -kanäle, mit niedriger Pressung erfüllt werden können. Warmluftgebläse, deren Bauart durch Austausch der Ventilatoreinheiten unterschiedliche Pressungen zulassen, haben den Nachteil, daß der Austausch erhöhten Arbeitsaufwand erfordert, weil die Gerätekonstruktion häufigen Wechsel nicht berücksichtigt. Nachteilig ist weiterhin, daß eine Ventilatoreinheit stets nutzlos herumsteht und daß z.B. ein Rücktransport der ausgebauten Einheit zum Vermieter durchgeführt werden muß.

Aus der US 4 307 701 A ist weiterhin eine Heizgeräteanordnung bekannt, die die Merkmale der Oberbegriffs von Anspruch 1 zeigt und bei der ein Zusatzventilator durch Bemischung von Umgebungsluft eine Erhöhung des Volumenstromes bei gleichzeitiger Reduzierung der vom Heizgerät gelieferten Lufttemperatur bewirkt. Die für die eingangs beschriebenen Anwendungen benötigte Erhöhung der Pressung unter Beibehaltung des Volumenstromes und des Temperaturniveaus kann mit dieser Konstruktion jedoch nicht bewerkstelligt werden. Der Erfindung liegt die Aufgabe zugrunde, ein Standard-Warmluftgebläse sowohl mit erhöhter Pressung als auch mit normaler Pressung betreiben zu können, ohne daß ein Gebläseaustausch erforderlich wäre, um dadurch die Einsatzmöglichkeiten erheblich zu erweitern.

Die Lösung der vorstehend genannten Aufgabe erfolgt durch die Merkmalskombination gemäß Anspruch 1. Erfindungsgemäß ist ein bei Bedarf zur Erhöhung der Pressung nachgerüstater Bausatz vorgesehen, der vorzugsweise einen mit dem Axialventilator des Warmluftgebläses identischen oder ähnlichen Axialventilator und eine diesen aufnehmende Halte- und Luftführungs-Vorrichtung aufweist. Ist das Warmluftgebläse serienmäßig mit mehreren Axialventilatoren ausgestattet, ist die Anzahl der nachgerüsteten Bausätze entsprechend. Werden sämtliche serienmäßig vorhandenen Axialventilatoren mit Nachrüstbausätzen ausgestattet, so passiert der gesamte Luftstrom nach der Aufrüstung die Axialventilatoranordnung und den wenigstens einen weiteren Axialventilator.

Zweckmäßige Ausgestaltungen der Erfindung ergeben sich aus den Unteransprüchen.

In einer bevorzugten Ausführungsform der Erfindung kann vorgesehen sein, daß auf einem Befestigungsflansch des im Standard-Warmluftgebläse enthaltenen Axialventilators ein zweiter Axialventilator mit einem Tubus und einem Montageflansch befestigt ist, und daß gleichzeitig der elektrische Anschluß des zweiten Ventilators direkt oder indirekt an die Versorgung des ersten Ventilators angeschlossen ist. Wird dieser Anschluß über eine am Standard-Warmluftgebläse bereits angebrachte Steckverbindung bewerkstelligt, so ist beim Auf- und Abrüsten kein Eingriff in die Elektroverdrahtung erforderlich.

Die Hauptvorteile liegen in der einfachen Anpassungsfähigkeit des erfindungsgemäßen Warmluftgebläses, sowohl für den Hersteller, durch geringere Anzahl der im Lager vorzuhaltenden Typen, als auch für den Anwender, der bei Änderung der Einsatzbedingungen keinen Austausch des Gerätes vornehmen muß. Ist ein Warmluftgebläse mit normaler Pressung vorhanden, so kann es durch einfaches Anflanschen des Zusatzventilators für höhere Pressung aufgerüstet werden. Das aufgerüstete Warmluftgebläse kann dann aber auch ohne Demontage des Zusatzventilators durch einfaches Abschalten der Stromversorgung desselben mit normaler Pressung betrieben werden; der Zusatzventilator läuft dann durch seine Anordnung im Luftstrom des serienmäßig vorhandenen Ventilators lediglich wirkungslos mit. Bei häufig wechselnden Einsatzbedingungen, wie z.B. bei einer Baustellenbeheizung, kann somit durch einfache Schalterbetätigung zwischen normaler und erhöhter Pressung entschieden werden. Bei der Betriebsart mit normaler Pressung ergibt sich ohne besondere Maßnahmen eine Reduzierung im Stromverbrauch und in der Geräuschemission.

Je nach Bauart des Warmluftgebläses kann ein nachgerüsteter, mit dem ursprünglich vorhandenen Ventilator identischer Zusatzventilator die Pressung des Warmluftgebläses um ein Mehrfaches der ursprünglichen Pressung erhöhen; an Versuchsgeräten wurden Erhöhungen um das Vierfache festgestellt.

Ein Ausführungsbeispiel der Erfindung wird anhand der Zeichnungen, in denen ein mobiles Warmluftgebläse mit Ölbrenner und Wärmetauscher dargestellt ist, näher beschrieben. Es zeigen:
- Fig. 1: eine Seitenansicht des Warmluftgebläses mit einem serienmäßig vorhandenen Ventilator, wobei das Gehäuse teilweise geschnitten dargestellt ist,
- Fig. 2: eine rückseitige Ansicht des Warmluftgebläses und
- Fig. 3: eine Seitenansicht des Warmluftgebläses mit dem serienmäßig vorhandenen Ventilator sowie dem nachgerüsteten Ventilator nebst Halte- und Luftführungsvorrichtung in angebautem Zustand.

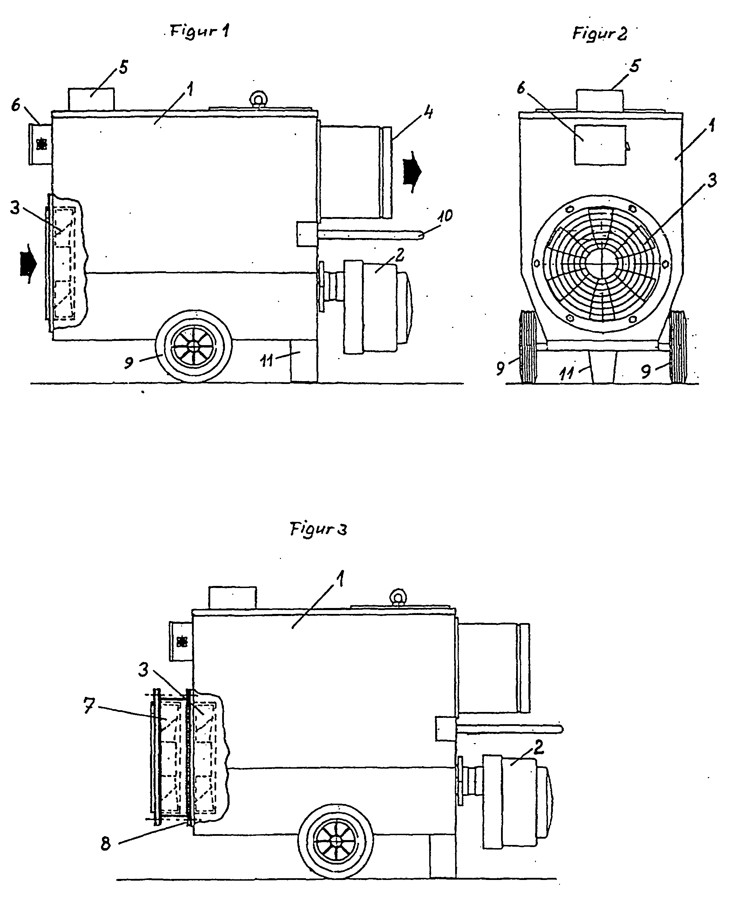

Ein in Fig. 1 und Fig. 2 der Zeichnung dargestelltes mobiles Warmluftgebläse, welcher nicht unter den Schutzbereich der Ansprüche fällt, weist ein kubisches Gehäuse 1 auf, das mit zwei Rädern 9 und einem Stützfuß 11 versehen ist. In dem Gehäuse 1 ist ein (nicht dargestellter) Wärmetauscher (Brennkammer) eingebaut, der für die Wärmezufuhr mit einem Energieumsetzer (Ölbrenner) 2 und zur Abfuhr der Abgase mit einem Abgasanschluß 5 ausgestattet ist. Der wärmetauscher (Brennkammer) gibt an seiner Außenfläche die Wärme an die zwischen der Außenfläche der Brennkammer und der Innenfläche des Gehäuses 1 befindliche Luft ab. Diese tritt durch das Lufteintrittsgitter eines serienmäßigen Axialventilators 3 in das Gehäuse 1 ein und nach erfolgter Erwärmung durch einen Luftaustritt 4 wieder aus dem Gehäuse 1 aus. An den Luftaustritt 4 können zur Warmluftführung und -verteilung Schläuche und Luftkanäle angeschlossen werden. Ein am Gehäuse 1 oberhalb des serienmäßigen Axialventilators 3 montierter Elektro-Anschlußkasten 6 enthält sowohl einen Elektroanschluß für den serienmäßigen Axialventilator 3 als auch einen Elektroanschluß für einen nachrüstbaren Axialventilator 7.

Fig. 3 zeigt das vorstehend beschriebene mobile Warmluftgebläse einschließlich des mittels der Halte- und Luftführungsvorrichtung 8 nachgerüsteten zusätzlichen Axialventilators 7.

## Patentansprüche

1. Mobiles Warmluftgebläse mit
- einem Gehäuse (1) mit Lufteintritts- und Austrittsöffnungen,
- einem oder mehreren Energie-/Wärmeumsetzern (2),
- einer Axialventilatoranordnung (3) zur Förderung des zu erwärmenden Luftstroms,
- und einer Nachrüsteinrichtung zur nachträglichen Aufrüstung der Axialventilatoranordnung (3) mit wenigstens einem weiteren Axialventilator (7), wobei das Warmluftgebläse mit der Nachrüsteinrichtung aufgerüstet ist,
**dadurch gekennzeichnet,**
**daß** im Betrieb des Warmluftgebläses der Luftstrom zunächst den wenigstens einen weiteren Axialventilator (7) und anschließend die Axialventilatoranordnung (3) passiert,
und **daß** das Warmluftgebläse auch ohne Demontage der Nachrüsteinrichtung durch Abschalten von deren Stromversorgung betrieben werden kann.

2. Warmluftgebläse nach Anspruch 1, **dadurch gekennzeichnet, daß** an dem wenigstens einen aufgerüsteten Axialventilator (7) oder an der Axialventilatoranordnung (3) eine aus einem Tubus und Flanschen bestehende Halteund Luftführungsvorrichtung (8) angeordnet ist, welche derart ausgebildet ist, daß sie ohne Demontage eines Axialventilators der Axialventilatoranordnung (3) auf dem Flansch desselben und mittels der Schrauben und/oder der Gewindebohrungen für die Befestigung desselben montierbar ist.

3. Warmluftgebläse nach Anspruch 1 oder 2, **dadurch gekennzeichnet, daß** wenigstens eine elektrische Steckvorrichtung vorgesehen ist, die den Anschluß des wenigstens einen aufgerüsteten Axialventilators (7) ohne Eingriff in die Verdrahtung ermöglicht.

4. Warmluftgebläse nach einem der Ansprüche 1 bis 3, **dadurch gekennzeichnet, daß** für das Abschalten des wenigstens einen aufgerüsteten Axialventilators (7) eine manuell oder automatisch zu betätigende Schaltvorrichtung vorgesehen ist, die ohne die Demontage der Axialventilatoranordnung (3) den wahlweisen Betrieb des Warmluftgebläses mit normaler oder erhöhter Pressung ermöglicht.

5. Warmluftgebläse nach einem der Ansprüche 1 bis 4, **dadurch gekennzeichnet, daß** der wenigstens eine aufgerüstete Axialventilator (7) zur Reduzierung von Anlaufstromspitzen zeitversetzt zu dem oder den vorhandenen Ventilatoren der Axialventilatoranordnung (3) schaltbar ausgebildet ist.

6. Warmluftgebläse nach einem der Ansprüche 1 bis 5, **dadurch gekennzeichnet, daß** der wenigstens eine aufgerüstete Axialventilator (7) in Abhängigkeit von temperatur- und/oder luftstrombeeinflußten Schaltelementen oder Reglern schaltbar ausgebildet ist.

## Claims

1. A mobile hot air blower comprising
- a housing (1) with air intake and outlet openings,
- one or more energy/heat converters (2),
- an axial fan arrangement (3) for conveying the air flow to be heated,
- and a post-fitting device for subsequently fitting the axial fan arrangement (3) with at least one further axial fan (7), wherein the hot air blower is fitted with the post-fitting device,
**characterised in that**
in operation of the hot air blower the air flow firstly passes through the at least one further axial fan (7) and then the axial fan arrangement (3), and the hot air blower can be operated even without dismantling of the post-fitting device by switching off the power supply thereof.

2. A hot air blower according to claim 1 **characterised in that** arranged on the at least one fitted axial fan (7) or the axial fan arrangement (3) is a holding and air guide apparatus (8) which comprises a tube and flanges and which is so designed that without dismantling of an axial fan of the axial fan arrangement (3) it can be mounted on the flange thereof and by means of the screws and/or the screwthreaded bores for fixing thereof.

3. A hot air blower according to claim 1 or claim 2 **characterised in that** there is provided at least one electrical plug device which permits the connection of the at least one fitted axial fan (7) without intervention into the wiring.

4. A hot air blower according to one of claims 1 to 3 **characterised in that** provided for switching off the at least one fitted axial fan (7) is a switch device which is to be actuated manually or automatically and which without dismantling of the axial fan arrangement (3) permits selective operation of the hot air blower at normal or increased pressure.

5. A hot air blower according to one of claims 1 to 4 **characterised in that** for reducing starting current peaks the at least one fitted axial fan (7) is designed to be switchable in time-displaced relationship with the present fan or fans of the axial fan arrangement (3).

6. A hot air blower according to one of claims 1 to 5 **characterised in that** the at least one fitted axial fan (7) is designed to be switchable in dependence on temperature- and/or air flow-influenced switching elements or regulators.

## Revendications

1. Soufflante à air chaud mobile comprenant :
- un carter (1) doté d'ouvertures d'entrée et de sortie d'air,
- un ou plusieurs convertisseurs (2) convertissant l'énergie en chaleur ;
- un dispositif à ventilateur axial (3) pour déplacer le flux d'air à réchauffer ;
- et un dispositif d'équipement complémentaire pour équiper ultérieurement le dispositif à ventilateur axial (3) d'au moins un ventilateur axial supplémentaire (7), la soufflante à air chaud étant équipée du dispositif d'équipement complémentaire, **caractérisée en ce que**, lorsque la soufflante à air chaud est en marche, le flux d'air traverse tout d'abord le au moins un ventilateur axial supplémentaire (7), puis le dispositif à ventilateur axial (3), et **en ce que** la soufflante à air chaud peut également fonctionner sans démonter le dispositif d'équipement complémentaire, en la déconnectant de l'alimentation électrique de ce dernier.

2. Soufflante à air chaud selon la revendication 1, **caractérisée en ce que** sur le au moins unique ventilateur axial supplémentaire installé (7) ou sur le dispositif à ventilateur axial (3) est monté un dispositif de fixation et de guidage de l'air (8) qui est composé d'un tube et de brides et qui est réalisé de telle sorte qu'il puisse être monté sans démonter un ventilateur axial du dispositif à ventilateur axial (3), sur la bride de ce dernier, et à l'aide des vis et/ou des taraudages destinés à la fixation de celui-ci.

3. Soufflante à air chaud selon la revendication 1 ou 2, **caractérisée en ce qu'**au moins une prise électrique est prévue, qui permet de brancher le au moins unique ventilateur axial supplémentaire installé (7) sans intervenir sur le câblage.

4. Soufflante à air chaud selon l'une des revendications 1 à 3, **caractérisée en ce que** pour éteindre le au moins unique ventilateur axial supplémentaire installé (7) est prévu un dispositif de commande à actionnement manuel ou automatique qui, sans démonter le dispositif à ventilateur axial (3), permet de faire fonctionner la soufflante à air chaud soit avec une pression normale, soit avec une pression plus élevée.

5. Soufflante à air chaud selon l'une des revendications 1 à 4, **caractérisée en ce que** le au moins unique ventilateur axial supplémentaire installé (7) est conçu de façon à pouvoir être mis en marche avec un décalage dans le temps par rapport à l'autre ou aux autres ventilateur(s) du dispositif à ventilateur axial (3), afin de réduire les pics de charge électrique au démarrage.

6. Soufflante à air chaud selon l'une des revendications 1 à 5, **caractérisée en ce que** le au moins unique ventilateur axial supplémentaire installé (7) est conçu de façon à pouvoir être mis en marche en fonction d'éléments logiques ou de régulateurs influencés par la température et/ou par le flux d'air.
